# EUROPÄISCHE PATENTSCHRIFT

(11) **EP 0 718 749 B1**
(45) Veröffentlichungstag und Bekanntmachung des Hinweises auf die Patenterteilung: **21.06.2000**
(21) Anmeldenummer: 95120275.3
(22) Anmeldetag: 21.12.1995
(51) Int. Cl.: H04N 7/173, G06F 17/30, G06F 3/033, G06F 3/023

(54) **Verfahren, Systemkomponente und Programm-Modul zur Auswahl eines Suchbegriffs**
Method, system components, and program module for selection of a search criteria
Procédé, composants de système et module de programme pour sélectionner un critère de recherche

(30) Priorität: 21.12.1994 DE 4445617
(43) Veröffentlichungstag der Anmeldung: 26.06.1996
(73) Patentinhaber: ALCATEL, 75008 Paris (FR)
(72) Erfinder: Hackbarth, Heidi, Dr., D-70825 Korntal (DE); Ohnsorge, Horst, Prof., D-71691 Freiberg (DE); Garcia-Victoria, Carlos, D-71732 Tamm (DE); Stannard, Richard, D-70435 Stuttgart (DE)
(74) Vertreter: Brose, Gerhard, Dipl.-Ing.

(56) Entgegenhaltungen:
- WO-A-93/11640
- GB-A- 2 187 580
- US-A- 4 768 144
- PATENT ABSTRACTS OF JAPAN vol. 014, no. 313 (P-1072), 5.Juli 1990 & JP-A-02 101578 (MITSUBISHI ELECTRIC CORP), 13.April 1990,

## Beschreibung

Die Erfindung betrifft ein Verfahren, eine Systemkomponente und ein Programm-Modul zur Auswahl von Informationen oder Aktionen, die als Suchbegriffe in Seiten zusammengefaßt sind, nach den Oberbegriffen der Ansprüche 1, 5 und 6.

Derartige Verfahren, Systemkomponenten und Programm-Module bilden die sogenannte Benutzeroberfläche oder Mensch-Maschine-Schnittstelle eines benutzergeführten Geräts. Beispiele dafür sind Auskunftssysteme wie das Videotext-System im Fernsehen oder öffentliche Fahrplanauskunftssysteme, oder auch Verkaufssysteme, beispielsweise über Bildschirmtext, wo zunächst eine Ware gesucht und anschließend deren Bestellung ausgelöst wird. Auch bei Auskunftssystemen kann am Ende einer Suche eine Aktion stehen, beispielsweise die Programmierung eines Videorekorders auf die ausgesuchte Sendung oder der Ausdruck der ausgesuchten Information.

Die Suchbegriffe sind systematisch in einer hierarchischen Baumstruktur angeordnet und durch Fortbewegung längs dieser Struktur auch auswählbar. Außerdem ist oft die direkte Adressierung eines Suchbegriffs entweder durch Eingabe des Suchbegriffs selbst oder einer dem Suchbegriff zugeordneten Ordnungsnummer vorgesehen.

Sind die Suchbegriffe und die Baumstruktur gut aufbereitet, was hier vorausgesetzt wird, aber für die Erfindung nicht notwendig ist, dann ist eine Suche in dieser Baumstruktur sehr effektiv. Dennoch kann es vorkommen, daß man in der eingeschlagenen Richtung nicht zum Ziel kommt. Dies ist vor allem dann der Fall, wenn man nacheinander mehrere Suchbegriffe aufsuchen will, zum Beispiel, um sich seine eigene Fernsehprogrammfolge zusammenzustellen oder um mehrere Waren gleichzeitig zu bestellen.

In solchen Fällen muß dann zunächst in der Hierarchie zurück gegangen und dann wieder vorwärts gesucht werden. Dies ist umständlich und oft auch zeitraubend, weil der Aufruf einer jeden Seite mit einer Wartezeit verbunden sein kann. Eine hierfür zumindest teilweise befriedigende Lösung wird durch das US-Patent 4,768,144 aufgezeigt. In dieser Schrift wird neben der bereits beschriebenen vertikalen Suchbewegung auch eine horizontale Suchbewegung in Seiten eines Videotext Systemes dargestellt. Allerdings ist bei einer horizontalen Suchbewegung, wie sie in dem US-Patent 4,768,144 offenbart wird, lediglich eine horizontale Suchbewegung zwischen solchen Seiten möglich, die zu einer gemeinsamen übergeordneten Seite gehören.

Die direkte Adressierung durch Eingabe des Suchbegriffs selbst oder durch eine dem Suchbegriff zugeordnete Ordnungsnummer setzt zunächst voraus, daß der richtige Suchbegriff oder die zugeordnete Ordnungsnummer bekannt ist. Sofern die Eingabe nicht durch Spracheingabe erfolgt, sind darüberhinaus auch die Eingabemittel zu wechseln (von Cursor-Steuerung oder Maus zu Zifferntasten oder gar alphanumerischer Tastatur).

Hier schafft die Erfindung Abhilfe durch ein Verfahren nach der Lehre des Anspruchs 1, eine Systemkomponente nach der Lehre des Anspruchs 5 und ein Programm-Modul nach der Lehre des Anspruchs 6.

Der Grundgedanke dabei ist, Sprünge in andere Seiten der selben Hierarchiestufe zu ermöglichen.

Vorteilhafte Ausgestaltungen der Erfindung sind den Unteransprüchen zu entnehmen.

Besonders wird dabei auf die Möglichkeit verwiesen, daß sich der Benutzer selbst eine eigene Seite aufbaut. Diese Seite kann dann beispielsweise sein persönliches Fernsehprogramm oder auch seine Bestell-Liste enthalten. Diese Seite kann auch außerhalb der Hierarchie liegen.

Im folgenden wird die Erfindung anhand von Ausführungsbeispielen unter Zuhilfenahme der beiliegenden Zeichnungen weiter erläutert.

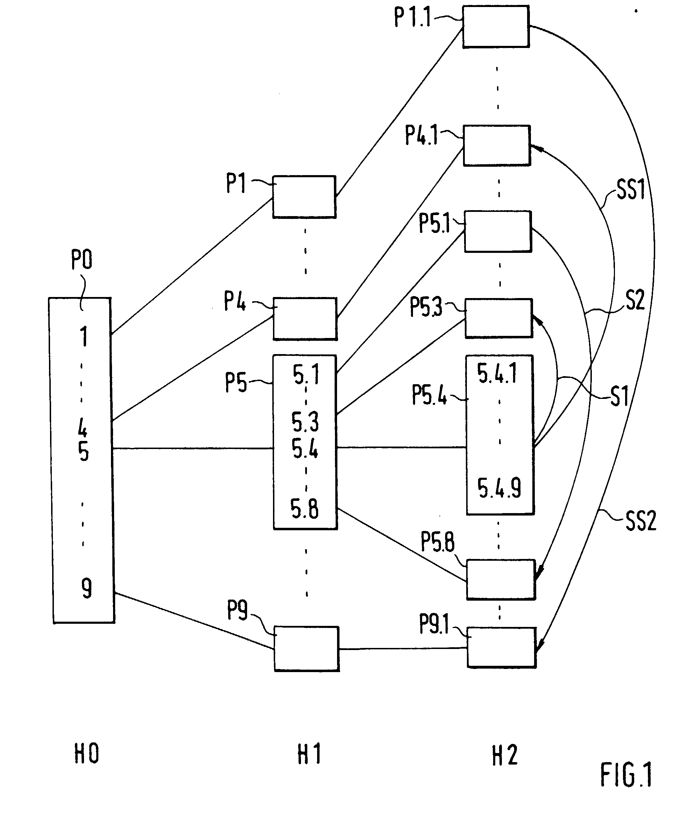

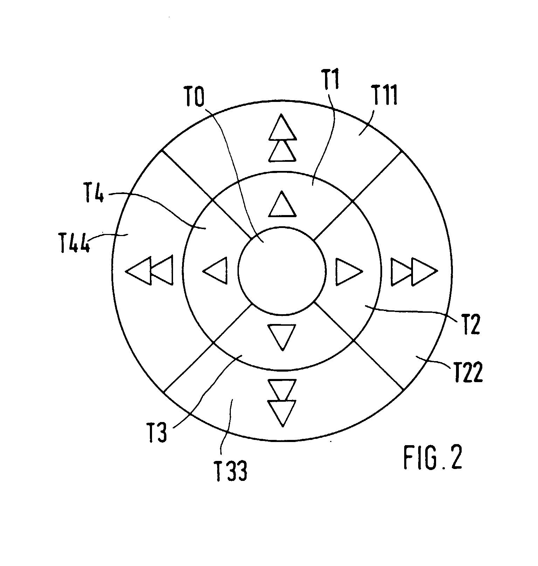

Zunächst wird anhand der Figuren 1 und 2 das Prinzip erläutert. Unter Zuhilfenahme weiterer Zeichnungen wird dann noch auf Einzelheiten eingegangen.
- Figur 1: zeigt die hierarchisch in Baumstruktur angeordneten Seiten und die darin möglichen Suchbewegungen.
- Figur 2: zeigt eine dafür geeignete Tastenanordnung.

Figur 1 enthält drei Hierarchieebenen H0, H1 und H2. Die Hierarchieebene H0 enthält eine Seite P0, in der Hierarchieebene H1 sind vier Seiten, P1, P4, P5 und P9, gezeigt und dazwischen liegende angedeutet und in der Hierarchieebene H2 sind sieben Seiten, P1.1, P4.1, P5.1, P5.3, P5.4, P5.8 und P9.1, gezeigt und dazwischen liegende angedeutet. In der Seite P0 sind Eintragungen 1 bis 9, die zusammen mit nicht dargestellten Erläuterungen auf die Seiten P1 bis P9 verweisen. Entsprechend sind in der Seite P5 Eintragungen 5.1 bis 5.8, die auf die Seiten P5.1 bis P5.8 verweisen und in der Seite P5.4 sind Eintragungen 5.4.1 bis 5.4.9. Weiter sind Übergänge zwischen den Hierarchieebenen H0 und H1 einerseits und H1 und H2 andererseits eingezeichnet. Beispielsweise ist ein Übergang von der Eintragung 5.3 in der Seite P5 zur Seite P5.3 eingezeichnet, der auch als Übergang zurück von der Seite P5.3 zur Seite P5 angesehen werden kann.

Erfindungsgemäß sind auch noch Sprünge S1 und S2 sowie SS1 und SS2 eingezeichnet. Diese Sprünge erfolgen zwischen Seiten der Hierarchieebene H2. Der Sprung S1 erfolgt von der Seite P5.4 in die Seite P5.3; der Sprung S2 erfolgt von der Seite P5.1 zur Seite P5.8. Der Sprung SS1 erfolgt aus der Seite P5.4 in die Seite P4.1; der Sprung SS2 erfolgt aus der Seite P1.1 in die Seite P9.1. Auch weitere, nicht eingezeichnete Sprünge, sowohl in der Hierarchieebene H2 als auch in der Hierarchieebene H1 sind möglich.

Die Tastenanordnung in Figur 2 weist drei konzentrische Kreise auf. Der innerste Kreis enthält eine Taste T0. Durch die zwei weiteren Kreise werden zwei Ringe gebildet, die jeweils in vier gleiche Sektoren aufgeteilt sind. Jeder Sektor trägt eine Taste T1 bis T4 und T11, T22, T33 und T44. Der innere Ring trägt oben die Taste T1, rechts die Taste T2, unten die Taste T3 und links die Taste T4. Im äußeren Ring ist der Taste T1 die Taste T11 zugeordnet, der Taste T2 die Taste T22, der Taste T3 die Taste T33 und der Taste T4 die Taste T44.

Unter Zuhilfenahme dieser beiden Figuren wird nun der erfindungsgemäße Ablauf beschrieben. Die Tasten T1 und T3 werden wie bei einer üblichen Cursor-Steuerung verwendet, um innerhalb einer Seite von einer Eintragung vor oder zurück zur nächsten zu gehen.

Mit der mittleren Taste T0 wird ausgeführt, was der eingestellten Eintragung entspricht. Dies ist beispielsweise bei der Eintragung 5.4 in der Seite P5 der Übergang zur Seite P5.4. Im Falle der Eintragung 5.4.1 in der Seite P5.4 mag dies die Programmierung eines Videorekorders auf eine bestimmte Sendung sein.

Da nicht mehrere Eintragungen in derselben Zeile vorgesehen sind, werden die Tasten T2 und T4 nicht für seitliche Bewegungen benötigt. Die Taste T4 wird deshalb verwendet, um in die übergeordnete Seite zurück zu gehen, beispielsweise also von einer der Eintragungen 5.4.1 bis 5.4.9 in die Seite P5 zurück.

Der Taste T2 kommen nun die erfindungsgemäßen Sprünge in benachbarte Seiten zu. Von einer beliebigen der Eintragungen 5.4.1 bis 5.4.9 aus erfolgt dann der Sprung S1 aus der Seite P5.4 in die Seite P5.3; entsprechende Sprünge ergeben sich weiter in die Seiten P5.2 und P5.1. In diesem Beispiel erfolgt dann von der Seite P5.1 der Sprung S2 in die Seite P5.8, so daß durch Betätigung der Taste T2 nacheinander alle der Seite P5 untergeordneten Seiten erreichbar sind.

In diesem Beispiel kommen den Tasten des äußeren Rings vergleichbare Funktionen zu wie den entsprechenden des inneren Rings, jedoch mit größeren Schrittweiten. Mit den Tasten T11 und T33 kann innerhalb der Seite mit größeren Schrittweiten weitergeschritten werden. Dies ist beispielsweise dann sehr sinnvoll, wenn eine Seite sehr viel mehr Eintragungen enthält, als gleichzeitig auf einem Bildschirm sichtbar gemacht werden können. Mit der Taste T44 ist dann immer der Rücksprung in die Seite P0 verbunden.

Mit der Taste T22 erfolgen dann Sprünge innerhalb der selben Hierarchieebene, aber über denjenigen Bereich hinaus, der der jeweils übergeordneten Seite untergeordnet ist. Gezeigt ist der Sprung SS1 aus der Seite P5.4 in die Seite P4.1 und der Sprung SS2 aus der Seite P1.1 in die Seite P9.1.

Unter Zuhilfenahme der Tasten T2 und T22 ist jede Seite innerhalb der selben Hierarchieebene, im Beispiel der Hierarchieebene H2, erreichbar. Mittels der Tasten T1 und T3 sowie T11 und T33 kann jede Eintragung in der jeweiligen Seite erreicht werden. Mit den Tasten T0, T4 und T44 werden die Hierarchieebenen gewechselt.

Einige Abwandlungsmöglichkeiten des gezeigten Beispiels:

Innerhalb einer Seite können Eintragungen stehen, die zu weiteren Seiten führen, solche, die in Aktionen münden und solche, die nur blind enden und ausschließlich Information bieten. Damit ergibt sich eine sehr unregelmäßige Baumstruktur, wie sie im übrigen für derartige Verfahren und Systeme üblich ist.

Es ist möglich, ein und denselben Suchbegriff systematisch an verschiedenen Stellen, auch in verschiedenen Hierarchieebenen, zu finden. Beispielsweise kann eine Eintragung 9.3 in der Seite P9 inhaltlich mit einer Eintragung 4.1.5 in der Seite P4.1 identisch sein. Dies ist keine erfindungsgemäße Besonderheit, muß aber mit berücksichtigt werden.

Die zuletzt genannte Eigenschaft der mehrfachen Eintragungen kann nun genützt werden, um eine eigene Seite aufzubauen (oder auch mehrere). Es kann dann jede gefundene Eintragung aus irgendeiner Seite irgendeiner Hierarchieebene beispielsweise durch Betätigen einer extra dafür vorgesehenen Taste in die eigene Seite übernommen werden. Von dieser eigenen Seite aus kann dann die entsprechende Aktion veranlaßt werden, zum Beispiel eine ausgewählte Fernsehsendung eingestellt werden.

Auch die Tastenanordnung nach Figur 2 kann abgewandelt werden:

Der äußere Ring kann auch ganz entfallen. Dann müssen aber mit der Taste T2 allein der Reihe nach alle Seiten der jeweiligen Hierarchieebene erreichbar sein.

Die mittlere Taste kann in eine linke und eine rechte Hälfte zweigeteilt sein, wobei die linke Hälfte dann die Funktion der Taste T4 übernimmt. Mittels der Taste T4 kann dann in der anderen Richtung von Seite zu Seite gesprungen werden. Entsprechend sind dann mit der Taste T44 größere Sprünge in die andere Richtung möglich.

Anstelle der Tastenanordnung nach Figur 2 kann auch jede andere geeignete und zum Beispiel für Cursor-Steuerungen geeignete Tastenanordnung treten. Auch andere geeignete Eingabemittel, wie Maus, Touch-Screen, Lichtstrahl und Spracheingabe sind möglich.

Auch die Darstellung der Seiten ist beliebig wählbar. Von der Bildschirmdarstellung wie bei Videotext über alpha-numerische Displays bis zur Sprachausgabe ist vieles möglich.

Bei der Bildschirmdarstellung bietet sich auch eine Darstellung an, bei der jede Seite als eine rotierende Walze dargestellt wird, auf der die einzelnen Eintragungen durch ein Fenster ähnlich wie bei Glücksspielautomaten sichtbar gemacht werden. Beim Übergang zur Nachbarseite schiebt sich dann die Nachbarwalze ins Bild und verdrängt die augenblickliche Walze zur Seite. Das Fenster kann halbdurchlässig dargestellt sein, wodurch sowohl die vorausgehenden und nachfolgenden Eintragungen als auch die linke und rechte Nachbarwalze erkennbar sind. Die Nachbarwalzen können sich dabei mitdrehen oder jeweils in Grundstellung feststehen. Der Übergang in die übergeordnete oder untergeordnete Seite (Walze) kann durch Zoom-Techniken dargestellt werden.

Zur Realisierung der beschriebenen Verfahrensabläufe sind keine grundsätzlich unbekannten Komponenten erforderlich. Die Steuerung solcher Verfahren erfolgt auf jeden Fall durch Programme. Die speziell zur Realisierung der Erfindung erforderlichen Mittel können ebenso geeignete Tastenanordnungen wie bestimmte Programm-Komponenten sein. Deren Erstellung mag möglicherweise aufwendig sein, liegt aber, ausgehend von dem hier beschriebenen, durchaus im Rahmen fachmännischen Handelns. Auch erfinderische Weiterentwicklungen sind natürlich nicht ausgeschlossen.

Im folgenden werden noch einige Einzelheiten genannt, die bei der Realisierung der vorliegenden Erfindung, zum Teil auch unabhängig davon, nützlich sind.

Die vorliegende Erfindung ist zunächst für einen Versuch zum "Interaktiven Fernsehen" vorgesehen. Dazu ist zusätzlich zum heimischen Fernsehgerät ein Zusatzgerät vorgesehen, das zwischen das Fernsehgerät und den Breitbandkabelanschluß eingeschleift wird. Außerdem ist ein Fernbedienungsgerät vorgesehen, mit dem das Zusatzgerät und darüber indirekt das Fernsehgerät bedient wird. Das Zusatzgerät ist als erfindungsgemäße Systemkomponente ausgeführt, die ein erfindungsgemäßes Programm-Modul enthält, um das erfindungsgemäße Verfahren durchzuführen.

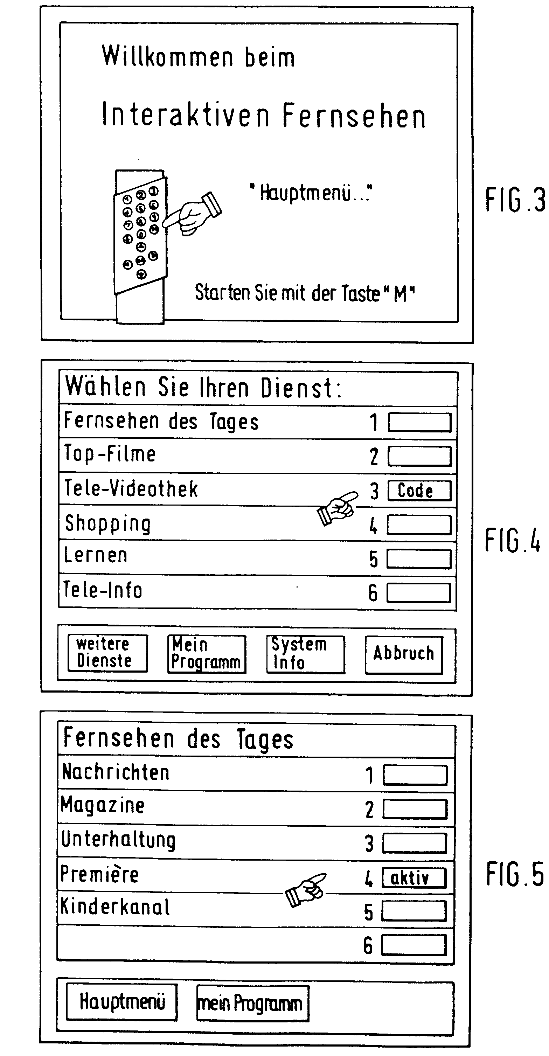

Beim Aktivieren des Zusatzgerätes erscheint eine Begrüßung auf dem Bildschirm des Fernsehgeräts (Figur 3). Sie lautet "Willkommen beim Interaktiven Fernsehen". Gezeigt wird dann durch eine audiovisuelle Darstellung die Bedienung des auf dem Bildschirm gezeigten Fernbedienungsgeräts. Verwendet wird eine Hand als Cursor. Dieser wird zunächst vom Programm, später per Fernbedienung bewegt. Außer der hörbaren Erklärung wird noch durch ein Stichwort, hier "Hauptmenü...", die jeweils erklärte Funktion angedeutet. Außerdem sind ständig die Worte "Starten Sie mit der Taste 'M' " eingeblendet, um anzudeuten, daß jederzeit ins Hauptmenü übergegangen werden kann.

Nach Drücken der Taste "M" befindet man sich in der Hierarchieebene H0 und es erscheint die Seite P0 gemäß Figur 4. In diesem Beispiel erscheint die Überschrift "Wählen Sie Ihren Dienst" und sechs Zeilen mit je einer Eintragung 1 bis 6. In diesem Beispiel sind die "Dienste" Fernsehen des Tages, Top-Filme, Tele-Videothek, Shopping, Lernen und Tele-Info genannt. Jeder Eintragung zugeordnet ist ein Kästchen, rechts neben der Nummer der Eintragung, in dem gegebenenfalls eine Zustandsinformation eingetragen ist, im Beispiel das Wort "Code", um anzuzeigen, daß das System auf die Eingabe des Zugangsnachweises zu einem gebührenpflichtigen Dienst wartet.

Die untere Randleiste enthält vier Felder für weitere Wahlmöglichkeiten. Das Feld "weitere Dienste" führt zu weiteren Eintragungen, z.B. 7 bis 9, derselben Seite P0 in der Hierarchieebene H0. Das Feld "Mein Programm" führt zu einer eigenen Seite, die zur Aufstellung eines eigenen Fernsehprogramms vorgesehen ist. Das Feld "System Info" führt zu einem internen Dienst, mit dem Information über den Umgang mit diesem "Interaktiven Fernsehen" gegeben wird, beispielsweise über Kosten, die eigene Seite "Mein Programm", Berechtigungseinstellung oder den anhand von Figur 3 beschriebenen Systemeinstieg. Das Feld "Abbruch" erlaubt es, gebührenpflichtige Dienste abzubrechen.

Die Seite P1 ("Fernsehen des Tages") in der Hierarchieebene H1 ist in Figur 5 dargestellt. Sie weist fünf Eintragungen mit den Bezeichnungen "Nachrichten", "Magazine", "Unterhaltung", "Première" und "Kinderkanal" auf. Die Eintragung 5, "Première", wurde bereits ausgewählt, das entsprechende Programm läuft bereits; das Kästchen rechts trägt die Eintragung "aktiv". Die untere Randleiste enthält hier die Felder "Hauptmenü" und "Mein Programm". Durch Auswahl des Hauptmenüs kommt man in die Seite P0 nach Figur 4 zurück.

Auch in laufende Programme kann die untere Randleiste eingeblendet werden. Sie enthält dann die Felder "Hauptmenü", "Mein Programm" und "Abbruch". Weiter können Angaben über Restzeit und Kosten enthalten sein.

Der Bildschirmhintergrund soll zwar neutral, nicht jedoch grell einfarbig, bevorzugt aber bewegt sein. Als Beispiel sind Strände mit Wellen denkbar, wobei die Wellen dann auch akustisch wiedergegeben werden können. Auf jeden Fall sollte auch irgendein unaufdringlicher akustischer Hintergrund vorgesehen sein. Auch sogenannte "Bildschirmschoner" sind als Hintergrund geeignet.

Zur Auflockerung sind von Zeit zu Zeit anstelle der Menütafeln kurze graphisch dargestellte Szenen, beispielsweise mit dem Maskottchen des Diensteanbieters, vorgesehen.

Bei bestimmten Seiten ist es vorteilhaft, die Bildschirmdarstellung nicht nur zeilenweise zu unterteilen. In diesem Fall wird automatisch auf normale Cursor-Steuerung umgeschaltet. Der Cursor (die Hand) braucht dabei nicht sehr genau auf das ausgewählte Feld positioniert zu werden. Die als Zielfelder wirkenden Gebiete sind größer als die angezeigten Felder.

Es ist auch ein Fernsteuergerät vorgesehen, bei dem auf der Unterseite zusätzliche Tasten vorgesehen sind, beispielsweise eine alphanumerische Tastatur.

## Patentansprüche

1. Verfahren zur Auswahl von Informationen oder Aktionen, bei dem die Informationen oder Aktionen als Suchbegriffe in Seiten (P0; P1,...,P9; P1.1,...,P9.1) zusammengefaßt sind, die hierarchisch (H0, H1, H2) in Baumform angeordnet sind, bei welchem Suchbewegungen innerhalb der ausgewählten Seite und Sprünge zur übergeordneten Seite und zu einer untergeordneten Seite vorgesehen sind, und bei dem ein Sprung (S1, S2; SS1, SS2) in eine benachbarte, in der selben Hierarchiestufe (H2) liegende Seite ausführbar ist **dadurch gekennzeichnet**, daß durch erste Bedienhandlungen Sprünge nur in solchen benachbarten, in derselben Hierarchiestufe (H2) liegenden Seiten (P5.1, P5.3, P5.8) ausgeführt werden, die derselben übergeordneten Seite (P5) untergeordnet sind, und daß durch zweite Bedienhandlungen Sprünge in solchen benachbarten, in derselben Hierarchiestufe (H2) liegenden Seiten (P4.1, P1.1, P9.1) ausgeführt werden, die nicht derselben übergeordneten Seite untergeordnet sind.

2. Verfahren nach Anspruch 1, dadurch gekennzeichnet, daß zusätzlich Sprünge aufgrund einer Adressierung möglich sind.

3. Verfahren nach Anspruch 1, dadurch gekennzeichnet, daß bestimmten Suchbegriffen nicht untergeordnete Seiten, sondern auszuführende Aktionen zugeordnet sind.

4. Verfahren nach Anspruch 1, dadurch gekennzeichnet, daß eine eigene Seite (Mein Programm) vorgesehen ist, in die in anderen Seiten gefundene Suchbegriffe derart eingetragen werden können, daß von dieser eigenen Seite aus von diesen Suchbegriffen ausgehend weitergesucht oder die zugeordneten Aktionen ausgeführt werden können.

5. Systemkomponente für ein System zur Auswahl von Informationen oder Aktionen, bei dem die Informationen oder Aktionen als Suchbegriffe in Seiten (P0; P1,...,P9; P1.1,...,P9.1) zusammengefaßt sind, die hierarchisch (H0, H1, H2) in Baumform angeordnet sind, bei welcher Suchbewegungen innerhalb der ausgewählten Seite und Sprünge zur übergeordneten Seite und zu einer untergeordneten Seite vorgesehen sind und bei welcher Mittel vorgesehen sind, mittels derer ein Sprung (S1, S2; SS1, SS2) in eine benachbarte, in derselben Hierarchiestufe (H2) liegende Seite ausführbar ist, **dadurch gekennzeichnet**, daß mit den Mitteln durch erste Bedienhandlungen Sprünge nur in solchen benachbarten, in derselben Hierarchiestufe (H2) liegenden Seiten (P5.1, P5.3, P5.8) ausgeführt werden können, die derselben übergeordneten Seite (P5) untergeordnet sind, und daß mit den Mitteln durch zweite Bedienhandlungen Sprünge in solchen benachbarten, in derselben Hierarchiestufe (H2) liegenden Seiten (P4.1, P1.1, P9.1) ausgeführt werden können, die nicht derselben übergeordneten Seite untergeordnet sind.

6. Programm-Modul für ein System zur Auswahl von Informationen oder Aktionen, bei dem die Informationen oder Aktionen als Suchbegriffe in Seiten (P0; P1,...,P9; P1.1,...,P9.1) zusammengefaßt sind, die hierarchisch (H0, H1, H2) in Baumform angeordnet sind, bei welchem Programm-Modul Suchbewegungen innerhalb der ausgewählten Seite und Sprünge zur übergeordneten Seite und zu einer untergeordneten Seite vorgesehen sind und bei welchem Programm-Modul Programm-Komponenten vorgesehen sind, mittels derer ein Sprung (S1, S2; SS1, SS2) in eine benachbarte, in derselben Hierarchiestufe (H2) liegende Seite ausführbar ist,
**dadurch gekennzeichnet**, daß mit den Programm-Komponenten durch erste Bedienhandlungen Sprünge nur in solchen benachbarten, in derselben Hierarchiestufe (H2) liegenden Seiten (P5.1, P5.3, P5.8) ausgeführt werden können, die derselben übergeordneten Seite (P5) untergeordnet sind, und daß mit den Programm-Komponenten durch zweite Bedienhandlungen Sprünge in solchen benachbarten, in derselben Hierarchiestufe (H2) liegenden Seiten (P4.1, P1.1, P9.1) ausgeführt werden können, die nicht derselben übergeordneten Seite untergeordnet sind.

## Claims

1. A method of selecting information or actions, wherein the information or actions are combined as search words in pages (P0; P1,...,P9; P1.1...,P9.1) which are arranged hierarchically (H0, H1, H2) in a tree structure, wherein search movements within the selected page and jumps to the superordinate page and to a subordinate page are provided, and wherein a jump (S1, S2; SS1, SS2) to an adjacent page in the same hierarchy level (H2) can be executed,
characterised in that by first control activities jumps are made only to those adjacent pages (P5.1, P5.3, P5.8) in the same hierarchy level (H2) which are subordinate to the same superordinate page (P5), and that by second control activities jumps are made to those adjacent pages (P4.1, P1.1, P9.1) in the same hierarchy level (H2) which are not subordinate to the same superordinate page.

2. A method according to Claim 1, characterised in that jumps in response to addressing are additionally possible.

3. A method according to Claim 1, characterised in that specific search words are assigned not subordinate pages, but actions to be executed.

4. A method according to Claim 1, characterised in that a separate page (My Programme) is provided in which search words found in other pages can be entered such that from this separate page, on the basis of these search words, a search can continue or the assigned actions can be executed.

5. A system component for a system for selecting information or actions, wherein the information or actions are combined as search words in pages (P0; P1...,P9; P1.1,...P9.1) which are arranged hierarchically (H0, H1, H2) in a tree structure, wherein search movements within the selected page and jumps to the superordinate page and to a subordinate page are provided, and wherein means are provided by which a jump (S1, S2; SS1, SS2) to an adjacent page in the same hierarchy level (H2) can be executed, characterised in that by said means, via first control activities, jumps can be made only to those adjacent pages (P5.1, P5.3, P5.8) in the same hierarchy level (H2) which are subordinate to the same superordinate page (P5), and that by said means, via second control activities, jumps can be made to those adjacent pages (P4.1, P1.1, P9.1) in the same hierarchy level (H2) which are not subordinate to the same superordinate page.

6. A program module for a system for selecting information or actions, wherein the information or actions are combined as search words in pages (PO; P1,...,P9; P1.1,...,P9.1) which are arranged hierarchically (H0, H1, H2) in a tree structure, in which program module search movements within the selected page and jumps to the superordinate page and to a subordinate page are provided, and in which program module program components are provided by means of which a jump (S1, S2; SS1, SS2) to an adjacent page in the same hierarchy level (H2) can be executed, characterised in that by means of the program components, via first control activities, jumps can be made only to those adjacent pages (P5.1, P5.3, P5.8) in the same hierarchy level (H2) which are subordinate to the same superordinate page (P5), and that by means of the program components, via second control activities, jumps can be made to those adjacent pages (P4.1, P1.1, P9.1) in the same hierarchy level (H2) which are not subordinate to the same superordinate page.

## Revendications

1. Procédé de sélection d'informations ou d'actions, avec lequel les informations ou actions sont réunies sous la forme de critères de recherche sur des pages (P0 ; P1, ..., P9 ; P1.1, ..., P9.1) qui sont disposées hiérarchiquement (H0, H1, H2) sous forme arborescente, avec lequel des mouvements de recherche à l'intérieur de la page sélectionnée et des sauts vers la page supérieure et vers une page subordonnée sont prévus, et avec lequel un saut (S1, S2 ; SS1, SS2) dans une page voisine située dans le même niveau hiérarchique (H2) est réalisable, caractérisé en ce que, par des premières opérations de commande, des sauts ne sont effectués que dans les pages (P5.1, P5.3, P5.8) situées dans le même niveau hiérarchique (H2) qui sont subordonnées à la même page supérieure (P5), et en ce que, par des deuxièmes opérations de commande, des sauts sont effectués dans les pages voisines (P4.1, P1.1, P9.1) situées dans le même niveau hiérarchique (H2) qui ne sont pas subordonnées à la même page supérieure.

2. Procédé selon la revendication 1, caractérisé en ce que des sauts supplémentaires sont possibles sur la base d'un adressage.

3. Procédé selon la revendication 1, caractérisé en ce que ce ne sont pas des pages subordonnées, mais des actions à exécuter qui sont affectées à certains critères de recherche.

4. Procédé selon la revendication 1, caractérisé en ce qu'une propre page (Mon programme) est prévue, dans laquelle des critères de recherche trouvés dans d'autres pages peuvent être inscrits de sorte que, depuis cette propre page, en partant de ces critères de recherche, il est possible de poursuivre la recherche ou bien les actions subordonnées peuvent être exécutées.

5. Composant de système pour un système de sélection d'informations ou d'actions, dans lequel les informations ou actions sont réunies sous la forme de critères de recherche sur des pages (P0 ; P1, ..., P9 ; P1.1, ..., P9.1) qui sont disposées hiérarchiquement (H0, H1, H2) sous forme arborescente, avec lequel des mouvements de recherche à l'intérieur de la page sélectionnée ou des sauts vers la page supérieure et vers une page subordonnée sont prévus, et avec lequel des moyens sont prévus à l'aide desquels un saut (S1, S2 ; SS1, SS2) dans une page voisine située dans le même niveau hiérarchique (H2) est réalisable, caractérisé en ce que, avec les moyens, par des premières opérations de commande, des sauts ne sont effectués que dans les pages (P5.1, P5.3, P5.8) situées dans le même niveau hiérarchique (H2) qui sont subordonnées à la même page supérieure (P5), et en ce que, avec les moyens, par des deuxièmes opérations de commande, des sauts peuvent être effectués dans les pages voisines (P4.1, P1.1, P9.1) situées dans le même niveau hiérarchique (H2) qui ne sont pas subordonnées à la même page supérieure.

6. Module de programme pour un système de sélection d'informations ou d'actions, avec lequel les informations ou actions sont réunies sous la forme de critères de recherche sur des pages (P0 ; P1, ..., P9 ; P1.1, ..., P9.1) qui sont disposées hiérarchiquement (H0, H1, H2) sous forme arborescente, avec lequel module de programme des mouvements de recherche à l'intérieur de la page sélectionnée et des sauts vers la page supérieure et vers une page subordonnée sont prévus et avec lequel module de programme des composants de programme sont prévus, au moyen desquels un saut (S1, S2 ; SS1, SS2) peut être exécuté dans une page voisine située dans le même niveau hiérarchique (H2),
caractérisé en ce que, avec les composants de programme, par des premières opérations de commande, des sauts ne sont effectués que dans les pages (P5.1, P5.3, P5.8) situées dans le même niveau hiérarchique (H2) qui sont subordonnées à la même page supérieure (P5), et en ce que, avec les composants de programme, par des deuxièmes opérations de commande, des sauts peuvent être effectués dans les pages voisines (P4.1, P1.1, P9.1) situées dans le même niveau hiérarchique (H2) qui ne sont pas subordonnées à la même page supérieure.
